# EUROPEAN PATENT APPLICATION

(11) **EP 4 776 176 A1**
(43) Date of publication of application: **15.07.2026**
(21) Application number: 25210977.2
(22) Date of filing: 24.10.2025
(51) Int. Cl.: G06F 40/20

(54) **5 WHY SUMMARY FOR PROBLEM ANALYSIS IN OBSERVABILITY SYSTEMS**

(30) Priority: 14.01.2025 IN 202511003186
(71) Applicant: Solarwinds Worldwide, LLC, Austin, TX 78735 (US)
(72) Inventor: KINI, Bailur Arjun, 560094 Bangalore (IN); PAPPU, Venkata Dikshitulu, 533201 Andhra Pradesh (IN); MURALIDHARAN, Karthik, 560078 Bangalore (IN)
(74) Representative: TBK

(57) **Abstract**

Systems, methods, apparatuses, and computer program products for generating 5 Why analysis to perform root cause analysis in a computer environment. One method may include receiving a set of related entities associated by a topology; receiving at least one parameter associated with the set of related entities; determining a correlation of related parameters; generating a relevant score for each event; and constructing a prompt configured for a large language model.

## Description

### TECHNICAL FIELD

Some example embodiments may generally relate to systems and/or methods for generating input prompts to perform root cause analysis in a computer environment.

### BACKGROUND

Root cause analysis (RCA) is a systematic procedure to identify the underlying causes of problems or incidents, as opposed to merely addressing the effects and symptoms. RCA can include a multi-step process, including first defining and clearly describing the issue, as well as where and when it occurs, and the resulting impact. Once the problem has been identified, data related to the incident can be collected, such as data logs and reports. The data can be analyzed in various ways, such as through an Ishikawa diagram. Relationships between the different causes can be identified to determine which cause(s) are the most significant contributors to the problem. With the causes identified, corrective actions can be developed and applied.

### SUMMARY

In accordance with certain example embodiments, an apparatus may include at least one processor and at least one memory storing instructions that, when executed by the at least one processor, cause the apparatus at least to receive a set of related entities associated by a topology. The at least one memory and instructions, when executed by the at least one processor, may further cause the apparatus at least to receive at least one parameter associated with the set of related entities. The at least one memory and instructions, when executed by the at least one processor, may further cause the apparatus at least to determine a correlation of related parameters. The at least one memory and instructions, when executed by the at least one processor, may further cause the apparatus at least to generate a relevant score for each event. The at least one memory and instructions, when executed by the at least one processor, may further cause the apparatus at least to construct a prompt configured for a large language model.

In a variant, the at least one memory and the instructions, when executed by the at least one processor, may further cause the apparatus at least to perform a 5 Whys analysis comprising a question, an answer, and a confidence score up to a predetermined number of times.

In a further variant, the 5 Whys analysis may include a JavaScript Object Notation (JSON) string.

In a further variant, the JSON string may be a formatted topology.

In a further variant, the 5 Whys analysis may be performed with a large language model.

In a variant, the at least one memory and the instructions, when executed by the at least one processor, may further cause the apparatus at least to weigh at least one parameter according to time from a given point in time.

In a variant, the at least one parameter may include one or more of at least one metric; at least one event; at least one log; or at least one trace.

In a variant, the determining may be based upon at least one of temporal-event distribution score; density score; or temporal score.

In a variant, the at least one memory and the instructions, when executed by the at least one processor, may further cause the apparatus at least to format the set of entities into a JavaScript Object Notation (JSON) format; format the topology into a predetermined format; and sort at least one correlated event by time.

In accordance with some example embodiments, a method may include receiving a set of related entities associated by a topology. The method may further include receiving at least one parameter associated with the set of related entities. The method may further include determining a correlation of related parameters. The method may further include generating a relevant score for each event. The method may further include constructing a prompt configured for a large language model.

In accordance with certain example embodiments, an apparatus may include means for receiving a set of related entities associated by a topology. The apparatus may further include means for receiving at least one parameter associated with the set of related entities. The apparatus may further include means for determining a correlation of related parameters. The apparatus may further include means for generating a relevant score for each event. The apparatus may further include means for constructing a prompt configured for a large language model.

In accordance with various example embodiments, a non-transitory computer readable medium may include program instructions that, when executed by an apparatus, cause the apparatus to perform at least a method. The method may include receiving a set of related entities associated by a topology. The method may further include receiving at least one parameter associated with the set of related entities. The method may further include determining a correlation of related parameters. The method may further include generating a relevant score for each event. The method may further include constructing a prompt configured for a large language model.

In accordance with some example embodiments, a computer program product may perform a method. The method may include receiving a set of related entities associated by a topology. The method may further include receiving at least one parameter associated with the set of related entities. The method may further include determining a correlation of related parameters. The method may further include generating a relevant score for each event. The method may further include constructing a prompt configured for a large language model.

In accordance with various example embodiments, an apparatus may include receiving circuitry configured to perform receiving a set of related entities associated by a topology. The apparatus may further include receiving circuitry configured to perform receiving at least one parameter associated with the set of related entities. The apparatus may further include determining circuitry configured to perform determining a correlation of related parameters. The apparatus may further include generating circuitry configured to perform generating a relevant score for each event. The apparatus may further include constructing circuitry configured to perform constructing a prompt configured for a large language model.

### BRIEF DESCRIPTION OF THE DRAWINGS

For a proper understanding of example embodiments, reference should be made to the accompanying drawings, wherein:
FIG. 1 illustrates an example of a flow diagram of a method according to various example embodiments;
FIG. 2 illustrates an example of a topology; and
FIG. 3 illustrates an example of various network devices according to some example embodiments.

### DETAILED DESCRIPTION

It will be readily understood that the components of certain example embodiments, as generally described and illustrated in the figures herein, may be arranged and designed in a wide variety of different configurations. Thus, the following detailed description of some example embodiments of systems, methods, apparatuses, and computer program products for generating input prompts to perform root cause analysis in a computer environment is not intended to limit the scope of certain example embodiments, but is instead representative of selected example embodiments.

A large language model (LLM) (*e.g.,* GPT 4, Claude 3) can be leveraged to perform root cause analysis more efficiently. For example, LLM-powered systems may be used to aggregate and preprocess data from a variety of sources, including system performance metrics, error logs, and reports. LLMs may perform pattern recognition by identifying common trends in past failures, which can lead to reoccurring problems being identified.

Certain example embodiments described herein may have various benefits and/or advantages to overcome the disadvantages described above. For example, certain example embodiments may provide productivity gains when using LLMs. Thus, certain example embodiments discussed below are directed to improvements in computer-related technology.

A relationship between entities (*e.g*., computer, cloud device, database, application, software) may be determined to understand how a system is performing overall, and those relationships may be input into an LLM to perform the root cause analysis automatically. The data may be fed into the LLM through a data prompt configured to perform an iterative procedure, such as 5 Whys. A 5 Whys procedure asks a "Why?" question five times, with each iteration asking "Why?" to the previous answer to "Why?". The 5 Whys may be performed with a combination of an Ishikawa diagram and a table.

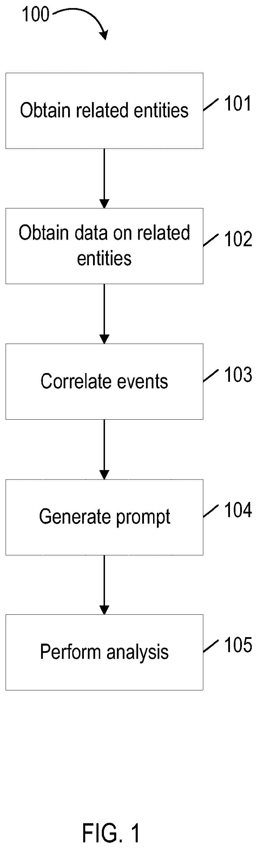

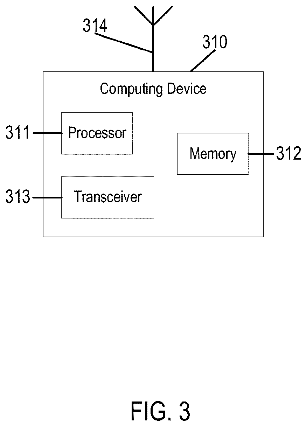

FIG. 1 illustrates an example of a flow diagram for a method 100 of a RCA procedure for a degrading entity that may be performed by a computing device, such as computing device 310 illustrated in FIG. 3, according to various example embodiments.

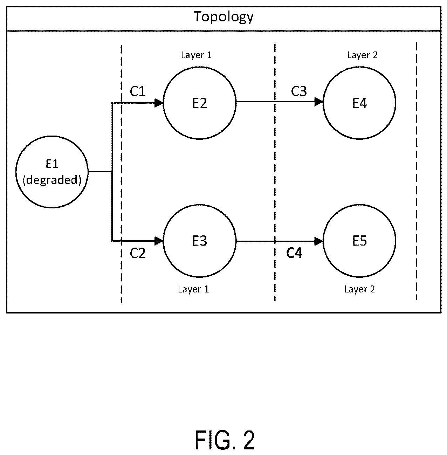

At step 101, the method may include obtaining a list of entities that are related to a degraded entity within a topology. For example, the topology illustrated in FIG. 2 depicts degraded entity E1, which has experienced degrading. Degraded entity E1 is related to entities E2 and E3 (*i.e.,* via Connection C1 and C2, respectively), which are one connection away (*i.e*., layer 1) from E1. Via E2 and E3, degraded entity E1 is also related to entities E4 and E5 (*i.e.,* via Connections C3 and C4, respectively), which are two connections away (*i.e.,* layer 2) from E1. Thus, in the example of FIG. 2, certain example embodiments may include obtaining a list indicating related entities E2-E5.

Entities, such as E1-E5, may include any observable entities (*e.g*., computer, cloud device, network device, network interface, database, application, software) that constantly generate metrics (*e.g*., CPU rate, network inflow, network outflow, memory utilization).

In certain example embodiments, only dependent entities may be obtained in order to filter insignificant entities. As an example, only dependent websites connected to a parent host would be traversed since they are within the same hierarchy (*e.g*., services communicating with other services).

In various example embodiments, the depth of the topology to obtain the list of entities that are related to the degraded entity may be configurable, such as with a maximum depth (*e.g*., maximum of 2 layers) and/or based upon the type of E1. The method may continue traversing the topology until a maximum depth has been reached.

In certain example embodiments, the total number of related entities in the list may depend on the type of E1. For example, the number of layers for obtaining related entities may be greater for a network device compared to a database.

In some example embodiments, the number of related entities to obtain may depend on the number of events associated with each layer of the topology. For example, although only layer 1 entities (*i.e.,* E2 and E3) are to be obtained, if the layer 1 entities do not yield at least a threshold number of events, the method may proceed to retrieving layer 2 entities (*i.e.,* E4 and E5). Conversely, although layer 1 entities (*i.e.,* E2 and E3) and layer 2 entities (*i.e.,* E4 and E5) are configured for retrievable, if layer 1 entities yield at least a threshold number of events, the method may not proceed with retrieving layer 2 entities.

At step 102, the method may further include retrieving event data of events associated with the list of entities obtained at step 101. For example, the retrieved event data may include any combination of metrics, events logs, and/or traces (MELTs).

In addition to receiving event data of E1, event data may be retrieved that is associated with any of the dependent entities. This may indicate that the root cause affecting entity E1 also exists in related entities E2 - E5.

For example, as a website is traversed, traces may be generated, where the website may make requests to other services; each microevent may be captured as a trace. These traces may then be obtained since they are associated with an entity within the traversed topology.

As another example, it may be desirable to avoid overclocking a CPU to the point of crashing; alerts and/or thresholds may be set up to identify such overclocking. Millions of such overclocking events may be generated. These events may be obtained as occurring at an entity within the traversed topology at step 101.

In certain example embodiments, an obtained entity without any retrievable data (*e.g*., MELTs) may be removed the list of obtained entities.

At step 103, the method may further include correlating the events received at step 102.

As an example, the correlating may be performed using any combination of temporal-event distribution score (*i.e.,* relevance score by multiplying density score and temporal score, and ordering the events in descending order), density score (*i.e.,* calculated by the difference between the timestamp of interest and timestamp of event), and temporal score (*i.e.,* similar to inverse document frequency, but use time slice).

Certain example embodiments may apply a term-frequency - inverse document frequency (TF-IDF) algorithm, wherein each event obtained at step 102 may be treated as a term, and a time slice (*e.g.,* 15 minutes) of event data may treated as a document. In this way, important correlated events (*e.g*., alerts, anomalies) may be identified by penalizing events that occur further from the time of interest compared to events that are closer to the time of interest. While TF-IDF is provided as an example, any technique may be used to derive the density score, including any techniques that account for temporal/ ordinal aspects of the data, as well as separates temporal scores.

Some example embodiments may apply a temporal-event distribution score (*i.e.,* relevant score), where a relevance score may be a direct multiplication of a density score and temporal score, wherein the events are ordered in descending order (*e.g.,* higher score of an event indicates higher relevance of that event).

Various example embodiments may apply a density score, wherein the time slice may be calculated by an hour difference between the timestamp of interest an timestamp of the event (*i.e.,* (number of events in a current time slice) / ((time slice) * (number of events in all time slices))). The density score may prioritize events that are prominent to the current hour of reference, while penalizing events in earlier hours.

Certain example embodiments may apply a temporal score, which may be similar to the inverse document frequency, but considers the time slice as the document (*i.e.,* log(number of time slices within the dataset / number of time slices with the current event)). This technique may estimate how common or rare an event is in the entire list of events (*i.e.,* the closer to 0, the more common the event).

Table 1 below provides an example timeline of a log of events:

**TABLE 1:**

| **Timestamp** | **Entity** | **Event** | **Event Type** | **Event ID** | **Slice No.** | **Slice Count** | **Event Count** |
|---|---|---|---|---|---|---|---|
| 2021-11-24 | network-1 | Initial Network Latency Spike | Metric Alert | alert-id-7 | 5 | 1 | 1 |
| 19:55:12 | | | | | | | |
| 2021-11-24 | network-1 | Network Packet Loss | Metric Alert | alert-id-6 | 5 | 1 | 1 |
| 20:25:12 | | | | | | | |
| 2021-11-24 | app-1 | Routine Health Check | Health Check Event | health-check-1 | 4 | 1 | 3 |
| 20:55:12 | | | | | | | |
| 2021-11-24 | network-1 | High Network Latency | Metric Alert | alert-id-5 | 4 | 1 | 1 |
| 21:25:12 | | | | | | | |
| 2021-11-24 | db-1 | Database Connection Pool Exhausted | Database Trace | trace-id-1 | 3 | 1 | 1 |
| 21:55:12 | | | | | | | |
| 2021-11-24 | app-2 | Routine Health Check | Health Check Event | health-check-1 | 3 | 1 | 3 |
| 22:25:12 | | | | | | | |
| 2021-11-24 | app-1 | High Memory Usage | Metric Alert | alert-id-2 | 2 | 1 | 1 |
| 22:55:12 | | | | | | | |
| 2021-11-24 | app-1 | Routine Health Check | Health Check Event | health-check-1 | 2 | 1 | 3 |
| 23:25:12 | | | | | | | |
| 2021-11-24 | db-1 | Database Connection Timeout | Error Log | log-id-2 | 1 | 1 | 1 |
| 23:55:12 | | | | | | | |
| 2021-11-25 | app-1 | Error: CPU Usage above 80% | Error Log | log-id-1 | 1 | 1 | 1 |
| 00:26:52 | | | | | | | |

Table 1 includes ten events from the infrastructure. These ten events are of various types that occur in an observability and monitoring environment, such as alerts, logs, traces, etc. The events may be split into slices based on their timestamps, which can be used to derive the slice count and event count.

Based upon Table 1, aggregated scores may be calculated in Table 2:

**TABLE 2:**

| **Rank** | **Event ID** | **Density Score** | **Temporal Score** | **Aggregated Relevance Score** |
|---|---|---|---|---|
| 1 | log-id-2 | 1.000 | 1.609 | 1.609 |
| 2 | log-id-1 | 1.000 | 1.609 | 1.609 |
| 3 | alert-id-2 | 0.500 | 1.609 | 0.804 |
| 4 | trace-id-1 | 0.333 | 1.609 | 0.536 |
| 5 | alert-id-5 | 0.250 | 1.609 | 0.402 |
| 6 | alert-id-7 | 0.200 | 1.609 | 0.321 |
| 7 | alert-id-6 | 0.200 | 1.609 | 0.321 |
| 8 | health-check-1 | 0.083 | 0.510 | 0.042 |

In various example embodiments, the slice and event count for each event may be used to calculate the Density Score and Temporal Score. The final Aggregated Relevance Score may then be computed from these scores. The table above is obtained by aggregating the Relevance Scores by the Event ID in the events table and is then sorted by the Aggregated Relevance Score. The final sorted events are given a rank to signify the relevance of the event.

At step 104, the method may further include generating a prompt based upon the events correlated at step 103. For example, the generated prompt may be configured for an LLM (*e.g*., GPT4, Claude 3, Llama) by providing instructions and added context of the filtered events. The instructions may be configured as a template string, and the filtered events may be formatted in a JavaScript Object Notation (JSON) string.

In certain example embodiments, the generated prompt may be configured to provide all information necessary for the LLM to perform RCA (*e.g.,* create hypotheses and reasonable assumptions). The information may be concise and clear to improve performance and efficiency of the model.

As an example, the information on each of the related entities from step 101 (*e.g*., name, type, other properties) may be provided in the JSON format. The topology of the entities may be formatted in a readable format (*e.g*., E1-E2 may be configured as "The Entity E1 is connected to Entity E2 with the connection C1."). These connections may be formatted as a list of topological connections that the LLM may use. In addition, the relevant correlated events may be sorted (*e.g.,* by time in ascending order), and formatted as a JSON format.

At step 105, the method may further include performing an analysis (e.g., 5 Whys analysis) by inputting the prompt generated at step 104 to determine a root cause of the degrading of E1.

For example, the LLM may perform asking a question; generating a hypothesis of the question; generating an answer to the question for the reasoning to choose the question and the hypothesis; generating a score on the viability of the hypothesis as a potential root cause, and act as a confidence to the model in its own hypothesis; and apply a flag to signify whether the root cause has bee reached, or if more questions need to be asked (*e.g*., with a maximum of five questions).

In certain example embodiments, the prompt may instruct the LLM to generate a hypothesis step-by-step, such as in a 5 Whys format. The prompt may instruct the model to analyze each subsequent answer and provide a confidence score. The confidence score may improve the understanding of the answer, and provide a subjective metric for the line of reasoning. The confidence scores may be used to determine whether the answer is worth displaying or the reasoning is not sufficient.

FIG. 3 illustrates an example of a system according to certain example embodiments. In one example embodiment, a system may include multiple devices, such as, for example, computing device 310.

Computing device 310 may be one or more of a base station (*e.g.,* 3G UMTS NodeB, 4G LTE Evolved NodeB, or 5G NR Next Generation NodeB), a serving gateway, a server, and/or any other access node or combination thereof.

Computing device 320 may include one or more of a mobile device, such as a mobile phone, smart phone, personal digital assistant (PDA), tablet, or portable media player, digital camera, pocket video camera, video game console, navigation unit, such as a global positioning system (GPS) device, desktop or laptop computer, single-location device, such as a sensor or smart meter, or any combination thereof. Furthermore, computing device 310 may be one or more of a citizens broadband radio service device (CBSD).

Computing device 310 may include at least one processor, indicated as 311. Processor 311 may be embodied by any computational or data processing device, such as a central processing unit (CPU), application specific integrated circuit (ASIC), or comparable device. The processors may be implemented as a single controller, or a plurality of controllers or processors.

At least one memory may be provided in one or more of the devices, as indicated at 312. The memory may be fixed or removable. The memory may include computer program instructions or computer code contained therein. Memory 312 may independently be any suitable storage device, such as a non-transitory computer-readable medium. The term "non-transitory," as used herein, may correspond to a limitation of the medium itself (*i.e.,* tangible, not a signal) as opposed to a limitation on data storage persistency (*e.g*., random access memory (RAM) vs. read-only memory (ROM)). A hard disk drive (HDD), random access memory (RAM), flash memory, or other suitable memory may be used. The memories may be combined on a single integrated circuit as the processor, or may be separate from the one or more processors. Furthermore, the computer program instructions stored in the memory, and which may be processed by the processors, may be any suitable form of computer program code, for example, a compiled or interpreted computer program written in any suitable programming language.

Processor 311 and memory 312 may be configured to provide means corresponding to the various blocks of FIG. 1. Although not shown, the devices may also include positioning hardware, such as GPS or micro electrical mechanical system (MEMS) hardware, which may be used to determine a location of the device. Other sensors are also permitted, and may be configured to determine location, elevation, velocity, orientation, and so forth, such as barometers, compasses, and the like.

As shown in FIG. 3, transceiver 313 may be provided, and one or more devices may also include at least one antenna, illustrated as 314. The device may have many antennas, such as an array of antennas configured for multiple input multiple output (MIMO) communications, or multiple antennas for multiple RATs. Other configurations of these devices, for example, may be provided. Transceiver 313 may be a transmitter, a receiver, both a transmitter and a receiver, or a unit or device that may be configured both for transmission and reception.

The memory and the computer program instructions may be configured, with the processor for the particular device, to cause a hardware apparatus, such as UE, to perform any of the processes described above (*i.e.,* FIG. 1). Therefore, in certain example embodiments, a non-transitory computer-readable medium may be encoded with computer instructions that, when executed in hardware, perform a process such as one of the processes described herein. Alternatively, certain example embodiments may be performed entirely in hardware.

In certain example embodiments, an apparatus may include circuitry configured to perform any of the processes or functions illustrated in FIG. 1. As used in this application, the term "circuitry" may refer to one or more or all of the following: (a) hardware-only circuit implementations (such as implementations in only analog and/or digital circuitry), (b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions), and (c) hardware circuit(s) and or processor(s), such as a microprocessor(s) or a portion of a microprocessor(s), that requires software (*e.g*., firmware) for operation, but the software may not be present when it is not needed for operation. This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

According to certain example embodiments, processor 311, and memory 312, may be included in or may form a part of processing circuitry or control circuitry. In addition, in some example embodiments, transceiver 313 may be included in or may form a part of transceiving circuitry.

In some example embodiments, an apparatus (*e.g*., computing device 310) may include means for performing a method, a process, or any of the variants discussed herein. Examples of the means may include one or more processors, memory, controllers, transmitters, receivers, and/or computer program code for causing the performance of the operations.

In various example embodiments, apparatus 310 may be controlled by memory 312 and processor 311 to receive a set of related entities associated by a topology; receive at least one parameter associated with the set of related entities; determine a correlation of related parameters; generate a relevant score for each event; and construct a prompt configured for a large language model.

Certain example embodiments may be directed to an apparatus that includes means for performing any of the methods described herein including, for example, means for receiving a set of related entities associated by a topology; means for receiving at least one parameter associated with the set of related entities; means for determining a correlation of related parameters; means for generating a relevant score for each event; and means for constructing a prompt configured for a large language model.

The features, structures, or characteristics of example embodiments described throughout this specification may be combined in any suitable manner in one or more example embodiments. For example, the usage of the phrases "various embodiments," "certain embodiments," "some embodiments," or other similar language throughout this specification refers to the fact that a particular feature, structure, or characteristic described in connection with an example embodiment may be included in at least one example embodiment. Thus, appearances of the phrases "in various embodiments," "in certain embodiments," "in some embodiments," or other similar language throughout this specification does not necessarily all refer to the same group of example embodiments, and the described features, structures, or characteristics may be combined in any suitable manner in one or more example embodiments.

As used herein, "at least one of the following: <a list of two or more elements>" and "at least one of <a list of two or more elements>" and similar wording, where the list of two or more elements are joined by "and" or "or," mean at least any one of the elements, or at least any two or more of the elements, or at least all the elements.

Additionally, if desired, the different functions or procedures discussed above may be performed in a different order and/or concurrently with each other. Furthermore, if desired, one or more of the described functions or procedures may be optional or may be combined. As such, the description above should be considered as illustrative of the principles and teachings of certain example embodiments, and not in limitation thereof.

One having ordinary skill in the art will readily understand that the example embodiments discussed above may be practiced with procedures in a different order, and/or with hardware elements in configurations which are different than those which are disclosed. Therefore, although some embodiments have been described based upon these example embodiments, it would be apparent to those of skill in the art that certain modifications, variations, and alternative constructions would be apparent, while remaining within the spirit and scope of the example embodiments.

### Partial Glossary

- ASIC: Application Specific Integrated Circuit
- CBSD: Citizens Broadband Radio Service Device
- CPU: Central Processing Unit
- DU: Distributed Unit
- eMBB: Enhanced Mobile Broadband
- GPS: Global Positioning System
- GPT: Generative Pre-Trained Transformer
- HDD: Hard Disk Drive
- IoT: Internet of Things
- JSON: JavaScript Object Notation
- LLM: Large Language Model
- PDA: Personal Digital Assistance
- RAM: Random Access Memory
- RAN: Radio Access Network
- RAT: Radio Access Technology
- RCA: Root Cause Analysis
- ROM: Read-Only Memory
- TF-IDF: Term-Frequency Inverse Document Frequency
- UE: User Equipment
- WLAN: Wireless Local Area Network

## Claims

1. An apparatus comprising:
at least one processor; and
at least one memory storing instructions that, when executed by the at least one processor, cause the apparatus at least to:
receive a set of related entities associated by a topology;
receive at least one parameter associated with the set of related entities;
determine a correlation of related parameters;
generate a relevant score for each event; and
construct a prompt configured for a large language model.

2. The apparatus of claim 1, wherein the at least one memory and the instructions, when executed by the at least one processor, further cause the apparatus at least to:
perform a 5 Whys analysis comprising a question, an answer, and a confidence score up to a predetermined number of times.

3. The apparatus of claim 2, wherein the 5 Whys analysis comprises a JavaScript Object Notation (JSON) string.

4. The apparatus of claim 3, wherein the JSON string is a formatted topology.

5. The apparatus of claim 2, wherein the 5 Whys analysis is performed with a large language model.

6. The apparatus of claim 1, wherein the at least one memory and the instructions, when executed by the at least one processor, further cause the apparatus at least to:
weigh at least one parameter according to time from a given point in time.

7. The apparatus of claim 1, wherein the at least one parameter comprises one or more of:
at least one metric;
at least one event;
at least one log; or
at least one trace.

8. The apparatus of claim 1, wherein the determining is based upon at least one of:
temporal-event distribution score;
density score; or
temporal score.

9. The apparatus of claim 1, wherein the at least one memory and the instructions, when executed by the at least one processor, further cause the apparatus at least to:
format the set of entities into a JavaScript Object Notation (JSON) format;
format the topology into a predetermined format; and
sort at least one correlated event by time.

10. A method comprising:
receiving a set of related entities associated by a topology;
receiving at least one parameter associated with the set of related entities;
determining a correlation of related parameters;
generating a relevant score for each event; and
constructing a prompt configured for a large language model.

11. The method of claim 10, further comprising:
performing a 5 Whys analysis comprising a question, an answer, and a confidence score up to a predetermined number of times.

12. The method of claim 11, wherein the 5 Whys analysis comprises a JavaScript Object Notation (JSON) string; and/or wherein the 5 Whys analysis is performed with a large language model.

13. The method of claim 12, wherein the JSON string is a formatted topology.

14. The method of claim 10, further comprising:
weighing at least one parameter according to time from a given point in time; and/or formatting the set of entities into a JavaScript Object Notation (JSON) format;
formatting the topology into a predetermined format; and
sorting at least one correlated event by time.

15. The method of claim 10, wherein the at least one parameter comprises one or more of:
at least one metric;
at least one event;
at least one log; or
at least one trace; and/or wherein the determining is based upon at least one of:
temporal-event distribution score;
density score; or
temporal score.

## Amended claims

### Amended claims in accordance with Rule 137(2) EPC.

1. An apparatus (310) comprising:
at least one processor (311); and
at least one memory (312) storing instructions that, when executed by the at least one processor, cause the apparatus at least to:
receive (101) a set of related entities associated by a topology; and
receive (102) parameters associated with the set of related entities,
**characterized in that** the at least one memory and the instructions, when executed by the at least one processor, further cause the apparatus at least to:
determine (103) a correlation of related parameters of the parameters associated with the set of related entities, thereby generating (104) a relevant score for each of the parameters associated with the set of related entities, the relevant score comprising at least one of a temporal-event distribution score, a density score or a temporal score; and
based on the relevant score generated for each of the parameters associated with the set of related entities, construct a prompt configured for a large language model.

2. The apparatus of claim 1, wherein the at least one memory and the instructions, when executed by the at least one processor, further cause the apparatus at least to:
perform a 5 Whys analysis comprising a question, an answer, and a confidence score up to a predetermined number of times.

3. The apparatus of claim 2, wherein the 5 Whys analysis comprises a JavaScript Object Notation (JSON) string.

4. The apparatus of claim 3, wherein the JSON string is a formatted topology.

5. The apparatus of claim 2, wherein the 5 Whys analysis is performed with a large language model.

6. The apparatus of claim 1, wherein the at least one memory and the instructions, when executed by the at least one processor, further cause the apparatus at least to:
weigh at least one parameter according to time from a given point in time.

7. The apparatus of claim 1, wherein the at least one parameter comprises one or more of:
at least one metric;
at least one event;
at least one log; or
at least one trace.

8. The apparatus of claim 1, wherein the at least one memory and the instructions, when executed by the at least one processor, further cause the apparatus at least to:
format the set of entities into a JavaScript Object Notation (JSON) format;
format the topology into a predetermined format; and
sort at least one correlated event by time.

9. A method comprising:
receiving (101) a set of related entities associated by a topology; and
receiving (102) parameters associated with the set of related entities,
the method **characterized by** further comprising:
determining (103) a correlation of related parameters of the parameters associated with the set of related entities, thereby generating (104) a relevant score for each of the parameters associated with the set of related entities, the relevant score comprising at least one of a temporal-event distribution score, a density score or a temporal score; and
based on the relevant score generated for each of the parameters associated with the set of related entities, constructing a prompt configured for a large language model.

10. The method of claim 9, further comprising:
performing a 5 Whys analysis comprising a question, an answer, and a confidence score up to a predetermined number of times.

11. The method of claim 10, wherein the 5 Whys analysis comprises a JavaScript Object Notation (JSON) string; and/or wherein the 5 Whys analysis is performed with a large language model.

12. The method of claim 11, wherein the JSON string is a formatted topology.

13. The method of claim 9, further comprising:
weighing at least one parameter according to time from a given point in time; and/or
formatting the set of entities into a JavaScript Object Notation (JSON) format;
formatting the topology into a predetermined format; and
sorting at least one correlated event by time.

14. The method of claim 9, wherein the at least one parameter comprises one or more of:
at least one metric;
at least one event;
at least one log; or
at least one trace.
